# EUROPEAN PATENT APPLICATION

(11) **EP 3 694 078 A1**
(43) Date of publication of application: **12.08.2020**
(21) Application number: 19155588.7
(22) Date of filing: 05.02.2019
(51) Int. Cl.: H02J 50/10, A41D 1/00, H02J 7/02, H02J 50/90

(54) **APPARATUS, METHODS AND COMPUTER PROGRAMS FOR ENABLING POWER TRANSFER BETWEEN GARMENTS**

(71) Applicant: Nokia Technologies Oy, 02610 Espoo (FI)
(72) Inventor: BURNS, Ollie, County Meath (IE); O'CONNELL, Diarmuid, Co. Kildare (IE)
(74) Representative: Swindell & Pearson Limited

(57) **Abstract**

The application relates to apparatus (101), methods and computer programs for enabling power transfer between garments (201, 211). For example the apparatus (101) may enable inductive charging between one or more receiver coils (203) in a first garment (201) and one or more transmitter coils (213) in a second garment (211). In examples of the disclosure, an apparatus (101) is configured to obtain a signal indicative of power received by at least one receiver coil (203) wherein the power is received by wireless transfer from at least one transmitter coil (213). If the obtained signal indicates that the power received by the at least one receiver coil (203) is below a threshold level then the apparatus (101) is configured to cause adjusting of at least one of the receiver coils (203) and/or at least one of the transmitter coils (213) relative to other coils in the garments (201, 211). The adjusting of the coils (203, 213) improves the power transfer between the garments (201, 211).

## Description

### TECHNOLOGICAL FIELD

Examples of the present disclosure relate to apparatus, methods and computer programs for enabling power transfer between garments. Some relate to apparatus, methods and computer programs for enabling wireless power transfer between garments.

### BACKGROUND

Garments comprising electronic devices require power to be supplied to the electronic devices. For instance, a garment comprising electronic components such as biological sensors or user output devices will require power in order to operate biological sensors or user output devices within the garment. Therefore apparatus and methods for providing power to the components within such garments are needed.

### BRIEF SUMMARY

According to various, but not necessarily all, examples of the disclosure, there is provided an apparatus comprising means for; obtaining a signal indicative of power received by at least one receiver coil wherein the power is received by wireless transfer from at least one transmitter coil and the at least one receiver coil is provided in a first garment and the at least one transmitter coil is provided in a second garment; and if the obtained signal indicates that the power received by the at least one receiver coil is below a threshold level, causing adjusting of at least one of the receiver coils and/or at least one of the transmitter coils relative to other coils in the garments.

Causing adjusting of at least one of the receiver coils and/or at least one of the transmitter coils may comprise reducing power supplied to at least one transmitter coil.

Causing adjusting of at least one of the receiver coils and/or at least one of the transmitter coils may comprise reversing polarity of at least one of the transmitter coils.

Causing adjusting of at least one of the receiver coils and/or at least one of the transmitter coils may comprise providing an output indicating to a user to adjust the relative position of the garments to improve alignment of the at least one receiver coil and the at least one transmitter coil.

The second garment may comprise an outer garment which is configured to be worn over the first garment.

The second garment may comprise power storage means.

The second garment may comprise means for coupling the one or more transmitter coils to an external power source.

The first garment may comprise an inner garment which is configured to be worn underneath the second garment.

The first garment may comprise one or more biometric sensors configured to obtain biometric information from a subject wearing the first garment.

According to various, but not necessarily all, examples of the disclosure, there is provided an apparatus comprising: processing circuitry; and memory circuitry including computer program code, the memory circuitry and the computer program code configured to, with the processing circuitry, cause the apparatus to: obtain a signal indicative of power received by at least one receiver coil wherein the power is received by wireless transfer from at least one transmitter coil and the at least one receiver coil is provided in a first garment and the at least one transmitter coil is provided in a second garment; and if the obtained signal indicates that the power received by the at least one receiver coil is below a threshold level, cause adjusting of at least one of the receiver coils and/or at least one of the transmitter coils relative to other coils in the garments.

According to various, but not necessarily all, examples of the disclosure, there is provided a garment comprising an apparatus as described above and one or more coils.

The coils may comprise one or more transmitter coils. The garment may comprise means for coupling the one or more transmitter coils to an external power source.

The coils may comprise one or more receiver coils. The garment may comprise power storage means.

The garment may comprise means for securing at least a portion of the garment in position relative to another garment.

The one or more coils may be provided in one or more sleeves of the garment.

According to various, but not necessarily all, examples of the disclosure, there is provided a method comprising: obtaining a signal indicative of power received by at least one receiver coil wherein the power is received by wireless transfer from at least one transmitter coil and the at least one receiver coil is provided in a first garment and the at least one transmitter coil is provided in a second garment; and if the obtained signal indicates that the power received by the at least one receiver coil is below a threshold level, causing adjusting of at least one of the receiver coils and/or at least one of the transmitter coils relative to other coils in the garments.

Adjusting of at least one at least one of the receiver coils and/or at least one of the transmitter coils may comprise at least one of: reducing power supplied to at least one transmitter coil; reversing polarity of at least one of the transmitter coils; providing an output indicating to a user to adjust the relative position of the garments to improve alignment of the at least one receiver coil and the at least one transmitter coil.

According to various, but not necessarily all, examples of the disclosure, there is provided a computer program comprising computer program instructions that, when executed by processing circuitry, cause: obtaining a signal indicative of power received by at least one receiver coil wherein the power is received by wireless transfer from at least one transmitter coil and the at least one receiver coil is provided in a first garment and the at least one transmitter coil is provided in a second garment; and if the obtained signal indicates that the power received by the at least one receiver coil is below a threshold level, causing adjusting of at least one of the receiver coils and/or at least one of the transmitter coils relative to other coils in the garments.

The computer program may be configured such that adjusting of at least one at least one of the receiver coils and/or at least one of the transmitter coils comprises at least one of: reducing power supplied to at least one transmitter coil; reversing polarity of at least one of the transmitter coils; providing an output indicating to a user to adjust the relative position of the garments to improve alignment of the at least one receiver coil and the at least one transmitter coil.

A physical entity embodying a computer program as described above.

An electromagnetic carrier signal carrying the computer program as described above.

### BRIEF DESCRIPTION

Some example embodiments will now be described with reference to the accompanying drawings in which:
Fig. 1 illustrates an apparatus;
Figs. 2A and 2B illustrate a first garment and a second garment;
Figs. 3A and 3B illustrate a first garment and a second garment;
Figs. 4A and 4B illustrate a first garment and a second garment;
Fig. 5 illustrates a method;
Fig. 6 illustrates a method;
Figs. 7A to 7C illustrate alignment of transmitter and receiver coils;
Figs. 8A and 8B illustrate effects of polarization of adjacent transmitter coils;
Figs. 9A and 9B show overlapping transmitter coils; and
Figs. 10A and 10B show a wireless charging system for an external garment.

### DETAILED DESCRIPTION

The Figs. illustrate apparatus 101, methods and computer programs 109 for enabling power transfer between garments 201, 211. For example the apparatus 101 may enable inductive charging between one or more receiver coils 203 in a first garment 201 and one or more transmitter coils 213 in a second garment 211. In examples of the disclosure, an apparatus 101 is configured to obtain a signal indicative of power received by at least one receiver coil 203 wherein the power is received by wireless transfer from at least one transmitter coil 213. If the obtained signal indicates that the power received by the at least one receiver coil 213 is below a threshold level then the apparatus 101 is configured to cause adjusting of at least one of the receiver coils 203 and/or at least one of the transmitter coils 213 relative to other coils 203, 213 in the garments 201, 211. The adjusting of the coils 203, 213 improves the power transfer between the garments 201, 211.

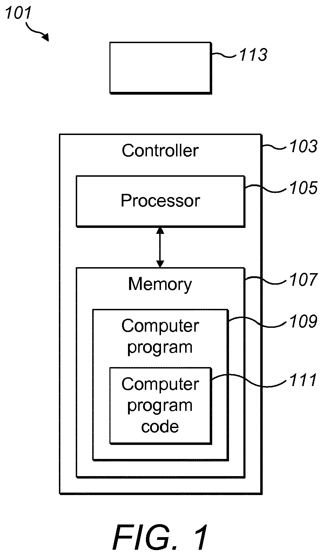

Fig. 1 schematically illustrates an apparatus 101 according to examples of the disclosure. The apparatus 101 illustrated in Fig. 1 may be a chip or a chip-set. In some examples the apparatus 101 may be provided within wearable garments such as a shirt or other item of clothing.

Fig.1 schematically illustrates an apparatus 101 according to examples of the disclosure. In the example of Fig. 1 the apparatus 101 comprises a controller 103. In the example of Fig. 1 the implementation of the controller 103 may be as controller circuitry. In some examples the controller 103 may be implemented in hardware alone, have certain aspects in software including firmware alone or can be a combination of hardware and software (including firmware).

As illustrated in Fig. 1 the controller 103 may be implemented using instructions that enable hardware functionality, for example, by using executable instructions of a computer program 109 in a general-purpose or special-purpose processor 105 that may be stored on a computer readable storage medium (disk, memory etc) to be executed by such a processor 105.

The processor 105 is configured to read from and write to the memory 107. The processor 105 may also comprise an output interface via which data and/or commands are output by the processor 105 and an input interface via which data and/or commands are input to the processor 105.

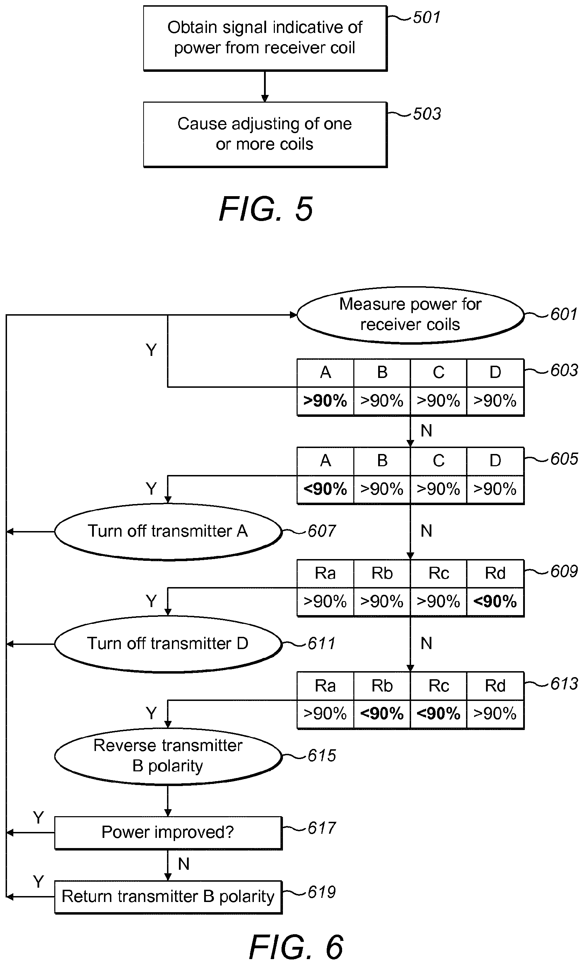

The memory 107 is configured to store a computer program 109 comprising computer program instructions (computer program code 111) that controls the operation of the apparatus 101 when loaded into the processor 105. The computer program instructions, of the computer program 109, provide the logic and routines that enables the apparatus 101 to perform the methods illustrated in Figs. 5 and 6. The processor 105 by reading the memory 107 is able to load and execute the computer program 109.

The apparatus 101 therefore comprises: at least one processor 105; and at least one memory 107 including computer program code 111, the at least one memory 107 and the computer program code 111 configured to, with the at least one processor 105, cause the apparatus 101 at least to perform: obtaining 501 a signal indicative of power received by at least one receiver coil 203 wherein the power is received by wireless transfer from at least one transmitter coil 213 and the at least one receiver coil 203 is provided in a first garment 201 and the at least one transmitter coil 213 is provided in a second garment 211; and if the obtained signal indicates that the power received by the at least one receiver coil 203 is below a threshold level, causing adjusting of at least one of the receiver coils 203 and/or at least one of the transmitter coils 213 relative to other coils 203, 213 in the garments 201, 211.

As illustrated in Fig.1 the computer program 109 may arrive at the apparatus 101 via any suitable delivery mechanism 113. The delivery mechanism 113 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 109. The delivery mechanism may be a signal configured to reliably transfer the computer program 109. The apparatus 101 may propagate or transmit the computer program 109 as a computer data signal. In some examples the computer program 109 may be transmitted to the apparatus 101 using a wireless protocol such as Bluetooth, Bluetooth Low Energy, Bluetooth Smart, 6LoWPan (IPᵥ6 over low power personal area networks) ZigBee, ANT+, near field communication (NFC), Radio frequency identification, wireless local area network (wireless LAN) or any other suitable protocol.

The computer program 109 comprises computer program instructions for causing an apparatus 101 to perform at least the following: obtaining 501 a signal indicative of power received by at least one receiver coil 203 wherein the power is received by wireless transfer from at least one transmitter coil 213 and the at least one receiver coil 203 is provided in a first garment 201 and the at least one transmitter coil 213 is provided in a second garment 211; and if the obtained signal indicates that the power received by the at least one receiver coil 203 is below a threshold level, causing adjusting of at least one of the receiver coils 203 and/or at least one of the transmitter coils 213 relative to other coils 203, 213 in the garments 201, 211.

The computer program instructions may be comprised in a computer program 109, a non-transitory computer readable medium, a computer program product, a machine readable medium. In some but not necessarily all examples, the computer program instructions may be distributed over more than one computer program 109.

Although the memory 107 is illustrated as a single component/circuitry it may be implemented as one or more separate components/circuitry some or all of which may be integrated/removable and/or may provide permanent/semi-permanent/ dynamic/cached storage.

Although the processor 105 is illustrated as a single component/circuitry it may be implemented as one or more separate components/circuitry some or all of which may be integrated/removable. The processor 105 may be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

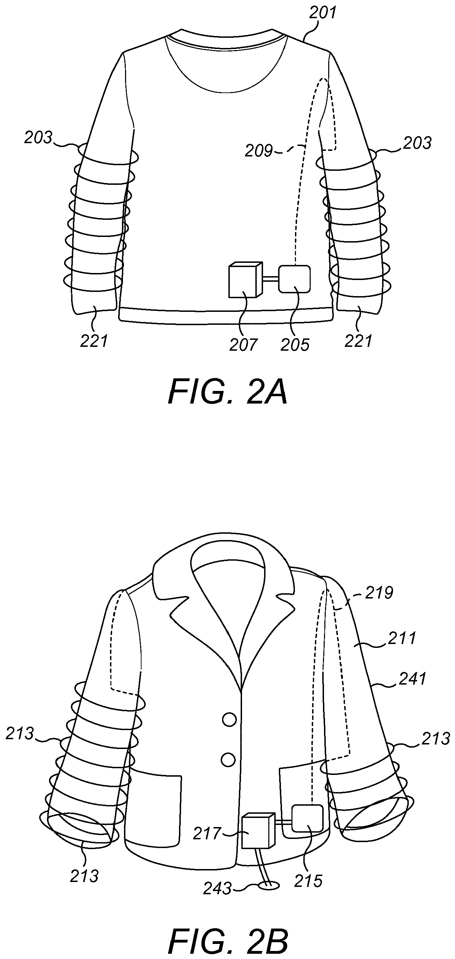

Figs. 2A and 2B illustrate a first garment 201 and a second garment 211 according to examples of the disclosure. An apparatus 101 as shown in Fig. 1 could be provided in the garments 201, 211 shown in Figs. 2A and 2B.

Fig. 2A shows an example first garment 201. The example first garment 201 comprises one or more receiver coils 203, one or more electronic components 205 and power storage means 207. It is to be appreciated that other components could be provided within the first garment 201 in other examples of the disclosure.

In the example of Fig. 2A the first garment 201 comprises a top or shirt which can be worn on the upper body of a subject. The top or shirt comprises sleeves 221 which receive the arms of the user when the user is wearing the first garment 201. In examples of the disclosure the first garment 201 could be an inner garment. The inner garment could be worn underneath one or more other garments. In some examples the inner garment could be configured so that when a user is wearing the inner garment, at least part of, the inner garment is in contact with the user's body.

The one or more receiver coils 203 may comprise any conductive coils which can be configured to receive power wirelessly from corresponding transmitter coils. The one or more receiver coils 203 may comprise conductive traces comprising any suitable materials such as copper. The receiver coils 203 could be comprise a flexible material so that the user can move when they are wearing the first garment 201.

In the example shown in Fig. 2A the first garment 201 comprises two receiver coils 203. The receiver coils 203 may be provided within any suitable part of the first garment 201. In some examples the receiver coils 203 could be embedded, or partially embedded, within the material of the first garment 201. In some examples the receiver coils 203 could be provided on a surface of the first garment 201 or at least partially on a surface of the first garment 201.

A first receiver coil 203 is provided in a first sleeve 221 of the first garment 201 and a second receiver coil 203 is provided in a second sleeve 221 of the first garment 201. The receiver coils 203 may be configured within the sleeves 221 of the first garment 201 so as to reduce the movement of the receiver coils 203 relative to the transmitter coils 213 during use. The sleeves 221 may fit more tightly to the body of the user than other parts of the first garment 201 and so this may reduce the movement of the receiver coils 203.

In some examples the receiver coils 203 may be wound tightly within the sleeves 221 to reduce lateral movement of the receiver coils 203 along a length of the user's arms. The receiver coils 203 may be configured to enable rotation of the receiver coils 203 around the circumference of the user's arms as this might make the first garment 201 more comfortable for a user to wear but would not affect the overlap between transmitter coils 213 and receiver coils 203.

The receiver coils 203 are coupled to the electronic components 205 by one or more conductive traces 209. The conductive traces 209 may comprise any suitable conductive and flexible material such as copper. The conductive traces 209 may be integrated within the fabric of the first garment 201. The conductive traces 209 enable power obtained by the receiver coils 203 to be transferred to the electronic components 205.

The conductive traces 209 may also enable information to be exchanged between the receiver coils 203 and the electronic components 205. For example, it may enable a measurement of the power received by the receiver coils 203 to be obtained by the electronic components 205.

The electronic components 205 may comprise any suitable components that can be integrated within a wearable garment. The electronic components may comprise components and/or circuitry which is configured to convert the alternating current power received by the receiver coils 203 into direct current power which can then be used to power one or more sensors or to charge a battery or for any other suitable use.

In some examples the electronic components 205 may comprises one or more sensing devices which may be configured to obtain information from the user wearing the first garment 201. For example the electronic components 205 may comprise one or more biometric sensors which could be configured to monitor biological parameters of the user. The biological parameters could comprise temperature, heart rate, movement or any other suitable parameters.

In some examples the electronic components 205 could comprise one or more output devices which may be configured to provide an output to a user wearing the first garment 201. For example, the electronic components 205 could be configured to provide an output such as an audio or haptic signal. This output could act as a reminder or an alert to the user wearing the first garment 201.

In some examples the electronic components 205 could comprise an apparatus 101 as shown in Fig, 1. In such examples the apparatus 101 would be configured to receive a signal indicative of the power received by the receiver coils 203 and be configured to use the information in this signal to control and adjust the coils 203, 213 as needed.

In some examples the electronic components 205 could comprise one or more transmitting devices. The transmitting devices could be configured to enable signals obtained by the first garment 201 to be transmitted to other devices. This may enable a signal indicative of the power received by the receiver coils 203 to be transmitted to a different devices so that an external apparatus 101 can determine how the respective coils 203, 213 should be adjusted.

The example first garment 201 of Fig. 2A also comprises power storage means 207. The power storage means 207 could comprise a chargeable battery, a capacitor or any other suitable means. The power storage means 207 may be configured to obtain power from the one or more receiver coils 203 and store this power so that it can be used by the electronic components 205 when needed.

Fig. 2B shows an example second garment 211. The example second garment 211 comprises one or more transmitter coils 213, one or more electronic components 215 and power storage means 217. It is to be appreciated that other components could be provided within the second garment 211 in other examples of the disclosure.

The second garment 211 shown in Fig. 2B is a corresponding garment to the first garment 201 shown in Fig. 2A. The second garment 211 corresponds to the first garment 201 because it is configured so that it can be worn as an outer garment over the first garment 201. For example the first garment 201 could comprise a shirt or jumper and the second garment 211 could comprise a coat or jacket. The second garment 211 corresponds with the first garment 201 so that when the second garment 211 is worn over the first garment 201 the transmitter coils 213 can be positioned so as to transfer power to the receiver coils 203.

The one or more transmitter coils 213 may comprise any conductive coils which can be configured to transmit power wirelessly to the corresponding receiver coils 203 in the first garment 201. The one or more transmitter coils 213 may comprise conductive traces comprising any suitable materials such as copper. The transmitter coils 213 could be comprise a flexible material so that the user can move when they are wearing the second garment 211.

In the example shown in Fig. 2B the second garment 211 comprises two transmitter coils 213. The transmitter coils 213 may be provided within any suitable part of the second garment 211. In some examples the transmitter coils 213 could be embedded, or partially embedded, within the material of the second garment 211. In some examples the transmitter coils 213 could be provided on a surface of the second garment 211 or at least partially on a surface of the second garment 211.

A first transmitter coil 213 is provided in a first sleeve 241 of the second garment 211 and a second transmitter coil 213 is provided in a second sleeve 241 of the second garment 211. The transmitter coils 213 may be positioned within the sleeves 241 so that when a user is wearing both the first garment 201 and the second garment 211 the transmitter coils 213 at least partially overlap with the receiver coils 203 so as to enable wireless power transfer. For instance, in the example of Figs. 2A and 2B both the transmitter coils 213 and the receiver coils 203 are provided in the lower parts of the sleeves 221, 241 of the first and second garments 201, 211.

The transmitter coils 213 may be configured within the sleeves 241 of the second garment 211 so as to reduce the movement of the transmitter coils 213 relative to the receiver coils 203 during use. In some examples the transmitter coils 213 may be wound tightly within the sleeves 241 to reduce lateral movement of the transmitter coils 213 along a length of the user's arms. The transmitter coils 213 may be configured to enable rotation of the transmitter coils 213 around the circumference of the user's arms as this might make the second garment 211 more comfortable for a user to wear but would not affect the overlap between transmitter coils 213 and receiver coils 203.

The transmitter coils 213 are coupled to the electronic components 215 by one or more conductive traces 219. The conductive traces 219 may comprise any suitable conductive and flexible material such as copper. The conductive traces 219 may be integrated within the fabric of the second garment 211. The conductive traces 219 enable power to be transferred to the transmitter coils 213. The conductive traces 219 may also enable the electronic components 215 to control the transmitter coils 213. This may enable the electronic components 215 to adjust one or more of the transmitter coils 213 as required.

In some examples the electronic components 215 could comprise one or more output devices which may be configured to provide an output to a user wearing the second garment 211. For example, the electronic components 215 could be configured to provide an output such as an audio or haptic signal. This output could act as a reminder or an alert to the user wearing the second garment 211.

In some examples the electronic components 215 could comprise an apparatus 101 as shown in Fig, 1. In such examples the apparatus 101 would be configured to receive a signal indicative of the power received by the receiver coils 203. This signal could be received from the electronic components 205 within the first garment 201. The apparatus 101 in the second garment 211 could be configured to use the information in this signal to control and adjust the transmitter coils 213 as needed.

The example second garment 211 of Fig. 2B also comprises power storage means 217. The power storage means 217 could comprise a chargeable battery, a capacitor or any other suitable means. The power storage means 217 may be configured to obtain power from one or more external power sources. For example, the power source 217 could be configured to be connected to an electricity supply to enable charging of the power storage means. The power from the power storage means 217 could then be used to power the electronic components 215 and also to provide power to the transmitter coils 213.

The power storage means 217 of the second garment 211 could be larger than the power storage means 207 of the first garment 201. This may enable the second garment 211 to be used to provide power to the first garment 201. As the second garment 211 is an outer garment it may be easier to charge the power storage means 217 of the second garment 211 than to charge the power storage means 207 of the first garment 201.

In the example of Fig. 2B the second garment 211 also comprises means for enabling a cable 243 to be coupled to the power storage means 217. This may enable the second garment 211 to be physically connected to an external power source to charge the power storage means 217. This could provide means for coupling the one or more transmitter coils 213 to an external power source. The means for enabling a cable 243 to be coupled to the power storage means 217 could be used when the second garment 211 is not being worn by the user.

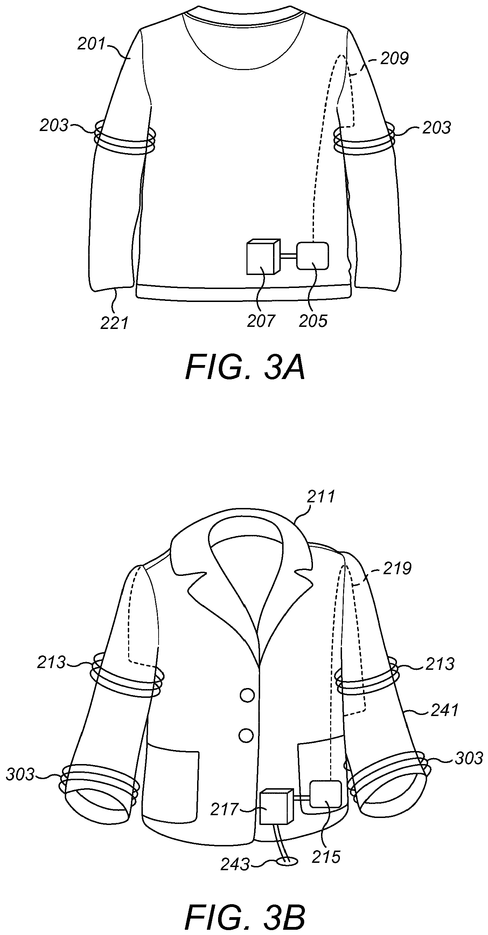

Figs. 3A and 3B illustrate another example first garment 201 and another corresponding example second garment 211. The first garment 201 shown in Fig. 3A is similar to the first garment 201 shown in Fig. 2A and the second garment 211 shown in Fig. 3B is similar to the second garment shown in Fig. 2B. Corresponding reference numerals are used for corresponding features.

In the example of Fig. 3A the receiver coils 203 are positioned in upper sections of the sleeves 221 of the first garment 201 rather than in a lower sections of the sleeves 221. Similarly the second garment 211 shown in Fig. 3B is similar to the second garment 211 shown in Fig. 2B except that the transmitter coils 213 are positioned in upper sections of the sleeves 241 rather than in a lower sections of the sleeves 241. It is to be appreciated that other positions for the coils 203, 213 could be used in other examples of the disclosure.

The second garment 211 shown in Fig. 3B comprises receiver coils 303 in addition to the transmitter coils 213. The receiver coils 303 are provided in the lower sections of the sleeves 241. The receiver coils 303 may enable the second garment 211 to be charged wirelessly by another device. The receiver coils 303 could enable wireless charging of the second garment 211 while a user is wearing the second garment 213.

In some examples this may enable the second garment 211 to be worn as an intermediate garment. For instance, it may enable a third garment to be worn over the second garment 211 where the third garment can be used to charge the second garment 211. This could also enable the third garment to charge the first garment 201 via the second garment 211.

The receiver coils 303 of the second garment 211 may be coupled to the power storage means 217 so that powered received by the receiver coils 303 can be stored in the power storage means 217 and used as needed.

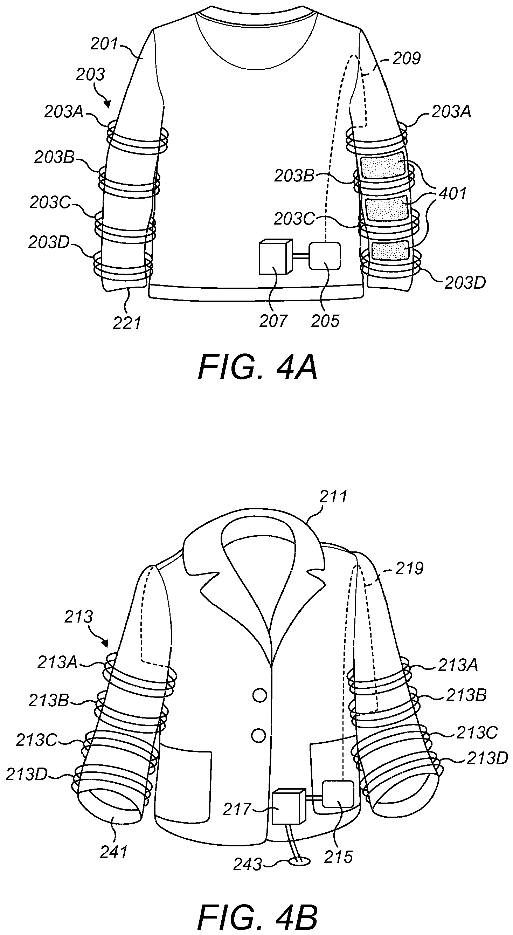

Figs. 4A and 4B show another example first garment 201 and another corresponding example second garment 211. The first garment 201 shown in Fig. 4A is similar to the first garment 201 shown in Fig. 2A and the second garment 211 shown in Fig. 4B is similar to the second garment 211 shown in Fig. 2B. Corresponding reference numerals are used for corresponding features.

In the example of Fig. 4A four receiver coils 203A, 203B, 203C, 203D are positioned in each of the sleeves 221 of the first garment 211. The four receiver coils 203A, 203B, 203C, 203D are provided in a row along the length of the sleeves 221. A space is provided between adjacent receiver coils 203A, 203B, 203C, 203D. It is to be appreciated that other numbers of receiver coils 203A, 203B, 203C, 203D could be used in other examples of the disclosure.

A stretchable portion 401 is provided between the adjacent receiver coils 203A, 203B, 203C, 203D. The stretchable portions 401 may comprise flexible sections of fabric which do not contain any receiver coils 203. The stretchable portions 401 may contain no electronic components or may contain only minimal electronic components. The stretchable portions 401 may enable movement of the receiver coils 203A, 203B, 203C, 203D relative to each other. For example, it may enable the spacing between adjacent receiver coils 203A, 203B, 203C, 203D to be increased or decreased. The stretchable portions 401 may be configured to enable movement of the user wearing the first garment 201 and reduce any restrictions of the movement that could be caused by the receiver coils 203A, 203B, 203C, 203D. This could make the first garment 201 more comfortable for a user to wear.

In the example of Fig. 4B four transmitter coils 213A, 213B, 213C, 213D are positioned in each of the sleeves 241 of the second garment 211. The positions of the four transmitter coils 213A, 213B, 213C, 213D correspond to the positions of the four receiver coils 203A, 203B, 203C, 203D so that when a user wears both the first garment 201 and the second garment 211 the respective receiver coils 203A, 203B, 203C, 203D overlap with the corresponding transmitter coils 213A, 213B, 213C, 213D so as to enable wireless power transfer.

The four transmitter coils 213A, 213B, 213C, 213D are also provided in a row along the length of the sleeves 241. A space is provided between adjacent transmitter coils 213A, 213B, 213C, 213D. The spacing between the adjacent transmitter coils 213A, 213B, 213C, 213D could be the same as, or similar to, the spacing between adjacent receiver coils 203A, 203B, 203C, 203D. It is to be appreciated that other numbers and configurations of transmitter coils 213A, 213B, 213C, 213D could be used in other examples of the disclosure. The number of the transmitter coils 213A, 213B, 213C, 213D could be the same as, or different to the number of receiver coils 203A, 203B, 203C, 203D.

Having four or more coils 203, 213 in each sleeves may make the garments 201, 211 more comfortable for the user to wear but this could also cause misalignment of the respective coils 203, 213 when the user moves. This may decrease the power transmitted between the coils 203, 213. Figs. 5 and 6 show example methods that can be used to compensate for movement of the transmitter coils 213 relative to the receiver coils 203.

It is to be appreciated that the garments 201, 211 shown in Figs 2A to 4C are examples and that other types of garments 201, 211 could be used in other examples of the disclosure. For example the coils 203, 213 could be located in positions other than the sleeves 221, 241.

In the examples shown the garments 201, 211 comprise shirts or coats that are worn on the upper half of the user's body. Other types of garments could be used in other examples of the disclosure. For instance, the garments could comprise trousers of other items of clothing. Where the garments comprise trousers the coils 203, 213 could be provided in the leg sections of the trousers.

In some examples the garments 201, 211 could comprise means which reduce the relative movement of the coils 203, 213 with respect to each other. These could comprise means for securing at least a portion of one garment relative to another garment. For example the garments 201, 211 could comprise elasticated cuffs which help to hold the ends of the sleeves 221, 241 in position and reduce lateral motion of the sleeves 221, 241. In some examples the garments 201, 211 could comprise additional fastening means such as buttons or magnetic fastening means which could be used to restrict the relative movement if the respective garments 201, 211.

In some examples one or both of the garments 201, 211 could comprise means for increasing the magnetic flux density between the transmitter coils 213 and the receiver coils 203. For instance in some examples one or both of the garments 201, 211 could comprise a ferromagnetic material positioned on an outside of the second garment 211 so as to steer magnetic field lines back towards the receiver coils 203 of the first garment 201. The ferromagnetic material could be configured to concentrate magnetic field lines in the locations of the respective coils 203, 213. The ferromagnetic material could be coated over at least part of the coils 203, 213, could be provided within the fabric of the garments 201, 211 or could be provided in any other suitable configuration.

Fig. 5 illustrates a first example method. The first example method could be implemented by an apparatus 101 as shown in Fig. 1. The apparatus 101 could be provided in a first garment 201 or in a second garment 211 or in some other electronic device. In some examples the method could be implemented using two or more different devices.

The method comprises, at block 501, obtaining a signal indicative of power received by at least one receiver coil 203 wherein the power is received by wireless transfer from at least one transmitter coil 213 and the at least one receiver coil 203 is provided in a first garment 201 and the at least one transmitter coil 213 is provided in a second garment 211. The power level could be reduced if there is misalignment between the receiver coil 203 and the corresponding transmitter coil 213. The misalignment could be caused by movement of the first and second garments 201, 211 relative to each other. The movement of the first and second garments 201, 211 relative to each other could be caused by the user moving while they are wearing the garments 201, 211.

If the obtained signal indicates that the power received by the at least one receiver coil 203 is below a threshold level, then at block 503, the method comprises causing adjusting of at least one of the receiver coils 203 and/or at least one of the transmitter coils 213 relative to other coils 203, 213 in the garments 201, 211.

Any suitable means may be used to cause the adjusting of at least one of the receiver coils 203 and/or at least one of the transmitter coils 213. In some examples adjusting at least one of the receiver coils 203 and/or at least one of the transmitter coils 213 could comprise adjusting the power supplied to at least one transmitter coil 213. In some examples this could comprise turning one or more of the transmitter coils 213 off so that no power, or only a reduced level or power, is provided to one or more of the transmitter coils 213.

In such examples only the transmitter coils 213 corresponding to receiver coils 203 which have low power levels would be turned off. The other transmitter coils 213 would still receive power and would still enable wireless charging of the other receiver coils 203. This would therefore mean than there would be an adjustment in the power transmitted by the transmitter coils 213 that are turned off relative to the transmitter coils 213 that are not turned off.

In some examples adjusting at least one of the receiver coils 203 and/or at least one of the transmitter coils 213 could comprise reversing polarity of at least one of the transmitter coils 213. The reversing of the polarity of one or more of the transmitter coils 213 could increase the magnetic flux density between the transmitter coils 213 and the receiver coils 203 and so increase the power transferred between the respective coils 203, 213.

In some examples the polarity of the transmitter coils 213 would only be reversed for some of the transmitter coils 213. This could ensure that the polarity of one transmitter coils 213 can be reversed relative to the polarity of one or more adjacent transmitter coils 213.

In some examples adjusting at least one of the receiver coils 203 and/or at least one of the transmitter coils 213 could comprise providing an output indicating to a user to adjust the relative position of the garments 201, 211 to improve alignment of the at least one receiver coil 203 and the at least one transmitter coil 213. For example, an alert could be provided via an output device which could provide an instruction to a user to instruct the user to rearrange the garments 201, 211. The output could be provided audibly, visually, haptically or by any other suitable means. Once the output has been provided the user could then rearrange the garments 201, 211 so as to adjust the position of one or more of the transmitter coils 213 relative to one or more of the receiver coils 203. In such examples the power received by the receiver coils 203 could be measure to determine if the user has followed the instructions and adjusted the garments 201, 211. Further outputs could be provided to the user either to indicate that the adjustment has been made satisfactorily or that further adjustment is needed.

The alignment of the respective coils 203, 213 may be improved by adjusting their relative positions so as to increase power transfer between the coils 203, 213. In some examples the alignment may be improved by increasing overlap between respective coils 203, 213. In some examples the alignment may be improved by bringing the respective coils closer together.

Fig. 6 illustrates another example method that could be implemented using an apparatus 101 as shown in Fig. 1. The method could be implemented using garments 201, 211 as shown in Figs. 4A and 4B where four coils 203, 213 are provided in each of the sleeves 221, 241 of the garments 201, 211. It is to be appreciated that variations of this method could be used with garments 201, 211 having other configurations.

At block 601 the power received at the receiver coils 203A, 203B, 203C, 203D is measured. The power received at the receiver coils 203A, 203B, 203C, 203D may be measured for each of the receiver coils 203A, 203B, 203C, 203D within the first garment 201. In some examples the power received at the receiver coils 203A, 203B, 203C, 203D may be measured for a subset of the receiver coils 203A, 203B, 203C, 203D. For instance, only the receiver coils 203A, 203B, 203C, 203D that are most likely to move relative to the corresponding transmitter coils 213A, 213B, 213C, 213D might be monitored.

At block 603 it is determined whether or not the received power level is above a threshold level for each of the receiver coils 203A, 203B, 203C, 203D that are monitored. In the example of Fig. 6 the threshold level is a percentage value of the maximum power value. In the example of Fig. 6 the percentage value is 90%. Other percentage values could be used in other examples of the disclosure. In some examples the threshold level could be an absolute value rather than a percentage value, so that the threshold level could be given in terms of the amount of power transferred rather than the proportion of available power transferred.

In the example of Fig. 6 the same threshold level is used for each of the receiver coils 203A, 203B, 203C, 203D. In other examples different threshold levels could be used for different ones of the receiver coils 203A, 203B, 203C, 203D. This could take into account different positions of the receiver coils 203A, 203B, 203C, 203D, different sizes of the receiver coils 203A, 203B, 203C, 203D and any other suitable factors.

If, at block 603, it is determined that the received power level is above a threshold level for all of the receiver coils 203A, 203B, 203C, 203D for which the power level is monitored then the method returns to block 601 and further measurements of the power from the receiver coils 203A, 203B, 203C, 203D are obtained. The measurements of the power from the receiver coils 203A, 203B, 203C, 203D may be obtained continuously or at discrete points in time.

If, at block 603, it is determined that the received power level is not above the threshold level for all of the receiver coils 203A, 203B, 203C, 203D for which the power level is monitored then the method proceeds to block 605.

At block 605 it is determined whether or not the received power level is above the threshold level for the first receiver coil 203A. The first receiver coil 203A may be a receiver coil 203A which is at the end of the row of receiver coils 203A, 203B, 203C, 203D so that the first receiver coil 203A is only adjacent to one other receiver coil 203.

If it is determined that received power level is below the threshold level for the first receiver coil 203A then at block 607 the apparatus 101 adjusts the transmitter coils 213A, 213B, 213C, 213D by turning off the first transmitter coil 213A which overlaps with the first receiver coil 203A. The first transmitter coil 213A may be at the edge of the transmitter coils 213A, 213B, 213C, 213D so that the first transmitter coils 213A is only adjacent to one other transmitter coil 213. When the first transmitter coil 213A is turned off power is no longer supplied to the first transmitter coil 213A.

If it is determined that the received power level is above the threshold level for the first receiver coil 203A then the method moves to block 609. At block 609 it is determined whether or not the received power level is above the threshold level for the fourth receiver coil 203D. The fourth receiver coil 203D may be a receiver coil 203 which is at the other end of the row of receiver coils 203A, 203B, 203C, 203D to the first receiver coil 203A. The fourth receiver coil 203D is also only adjacent to one other receiver coil 203.

If it is determined that received power level is below the threshold level for the fourth receiver coil 203D then at block 611 the apparatus 101 adjusts the transmitter coils213A, 213B, 213C, 213D by turning off the fourth transmitter coil 213D which overlaps with the fourth receiver coil 203. The fourth transmitter coil 213D may also be at the edge of the transmitter coils 213A, 213B, 213C, 213D so that the fourth transmitter coil 213D is only adjacent to one other transmitter coil 213. The fourth transmitter coil 213D may be at the other end of the row of transmitter coils 213A, 213B, 213C, 213D to the first transmitter coil 213A.

If it is determined that received power level is above the threshold level for the fourth receiver coil 203D then the method moves to block 613. At block 613 it is determined that the received power level is below the threshold level for at least one of the second and third receiver coils 203B, 203C. The second and third receiver coils 203B, 203C are positioned within the middle of the row of receiver coils 203 so that each of the second and third receiver coils 203B, 203C are adjacent to two other receiver coils 203.

In the example method of Fig. 6 it may be determined that the received power level is below the threshold level for both of the second and third receiver coils 203B, 203C. In other examples where the garments 201, 211 comprise more than four coils 203, 213 it may be determined whether or not the received power level is below the threshold level for any of the receiver coils 203A, 203B, 203C, 203D which are not provided at the ends of the rows of receiver coils 203A, 203B, 203C, 203D. That is, the power levels may be determined for any receiver coils 203 which are positioned between two other receiver coils 203.

Once it has been determined that the received power level is below the threshold level for at least one of the second and third receiver coils 203B, 203C then, at block 615, the apparatus 101 adjusts the transmitter coils 213 by reversing the polarity of one or more of the central transmitter coils 213B, 213C. In the example of Fig. 6 there are only two central transmitter coils 213B, 213C so the method only comprises reversing the polarity of one or the transmitter coils 213 so that the adjacent transmitter coils 213 have different polarities. In the example of Fig. 6 the polarity of the second transmitter coil 213B is reversed. In other examples where there are more than two central transmitter coils 213B, 213C then the polarities of other transmitter coils 213 could also be reversed depending on the arrangement of the transmitter coils 213.

At block 617 it is determined whether or not the adjusting of the transmitter coils 213 at block 615 has improved the power received at the central receiver coils 203B, 203C. If the adjustment has improved the power levels then the method returns to block 601 and further measurements of the power from the receiver coils 203A, 203B, 203C, 203D are obtained.

If the adjustment has not improved the power levels then the method proceeds to block 619 and further adjustments are made to the transmitter coils. In the example of Fig. 6 the further adjustment comprises returning the polarity of the second transmitter coil 213 B to the original polarity. In other examples, where more coils are provided then the further adjustments could comprise changing the polarity of different transmitter coils 213.

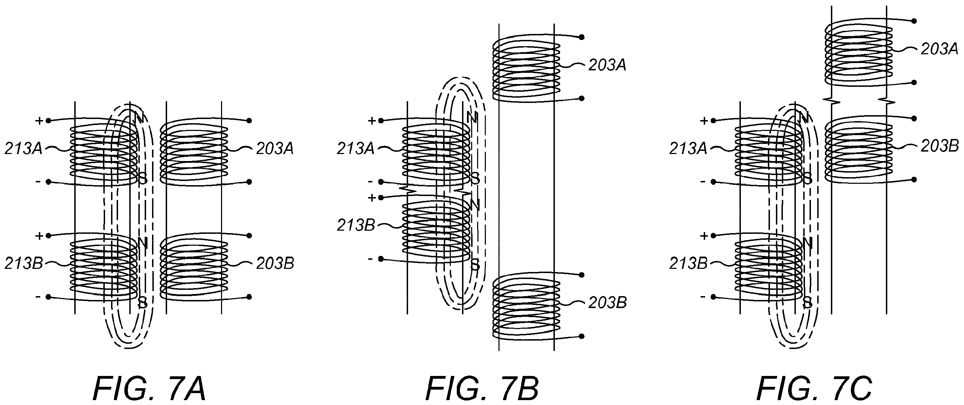

Figs. 7A to 7C schematically illustrate alignments of transmitter coils 213 and receiver coils 203 which could be provided in garments 201, 211 as described above. In the example of Figs. 7A to 7C two transmitter coils 213A, 213B and two receiver coils 203A, 203B are shown. It is to be appreciated that any numbers of transmitter coils 213 and receiver coils 203 could be used in examples of the disclosure.

In the configuration of Fig. 7A the transmitter coils 213 and receiver coils 203 are aligned so that there is good overlap between the transmitter coils 213 and receiver coils 203. The transmitter coils 213 and receiver coils 203 are aligned so that a first transmitter coil 213A overlaps with a first receiver coil 203A and a second transmitter coil 213B overlaps with a second receiver coil 203B. In this configuration the magnetic flux generated by the transmitter coils 213 is concentrated in the region in which the receiver coils 203 are located which enables efficient power transfer to the receiver coils 203. This enables good power transfer between the respective garments 201, 211.

In examples of the disclosure, if the transmitter coils 213 and receiver coils 203 were aligned as shown in Fig. 7A, then when the power received by the receiver coils 203 is measured this would be above the threshold level and no adjustment of the transmitter coils 213 and receiver coils 203 would be needed.

In the configuration of Fig. 7B the receiver coils 203 have moved relative to the transmitter coils 213. In this example the spacing between the receiver coils 203 has increased relative to the spacing between the transmitter coils 213. This could be caused by crumpling of the fabric of the second garment 211 and/or by stretching of the fabric of the first garment 201. In the example of Fig. 7B the transmitter coils 213 and receiver coils 203 are not aligned so that a first transmitter coil 213A does not overlap with any of the receiver coils 203A, 203B and the second transmitter coil 213B also does not does not overlap with any of the receiver coils 203A, 203B . In this configuration the magnetic flux generated by the transmitter coils 213 is concentrated in the region between the receiver coils 203 which reduces the power transferred to the receiver coils 203.

In examples of the disclosure, if the transmitter coils 213 and receiver coils 203 were configured as shown in Fig. 7B, then when the power received by the receiver coils 203 is measured this would be below the threshold level and adjustment of the transmitter coils 213 and receiver coils 203 would be needed. In this example the power could be increased by providing an alert to the user to adjust their garments 201, 211 so as to realign the transmitter coils 213 and receiver coils 203.

In the configuration of Fig. 7C the receiver coils 203 have also moved relative to the transmitter coils 213. In this example the receiver coils 203 have moved laterally compared to the transmitter coils 213. This could be caused by movement of part of the first garment 201 relative to the second garment 211. In this configuration only one of the receiver coils 203 overlaps with one of the transmitter coils 213. In this configuration the first transmitter coil 213A overlaps with the second receiver coils 203B so that there is magnetic flux concentrated in the region between the first transmitter coils 213A and the second receiver coil 203B. The second transmitter coil 213B and the first receiver coil 203A do not overlap with any other coils and so there is no transfer of power to the first receiver coil 203A. This reduces the power transferred to the receiver coils 203 compared to the arrangement shown in Fig. 7A.

In this example when the power received by the receiver coils 203 is measured it would be below the threshold level for the first receiver coil 203A but above the threshold level for the second receiver coils 203B. The efficiency of the power transfer could be increased by turning the second transmitter coil 213B off as this is not overlapping with a corresponding receiver coil 203 and so is not contributing to power transfer.

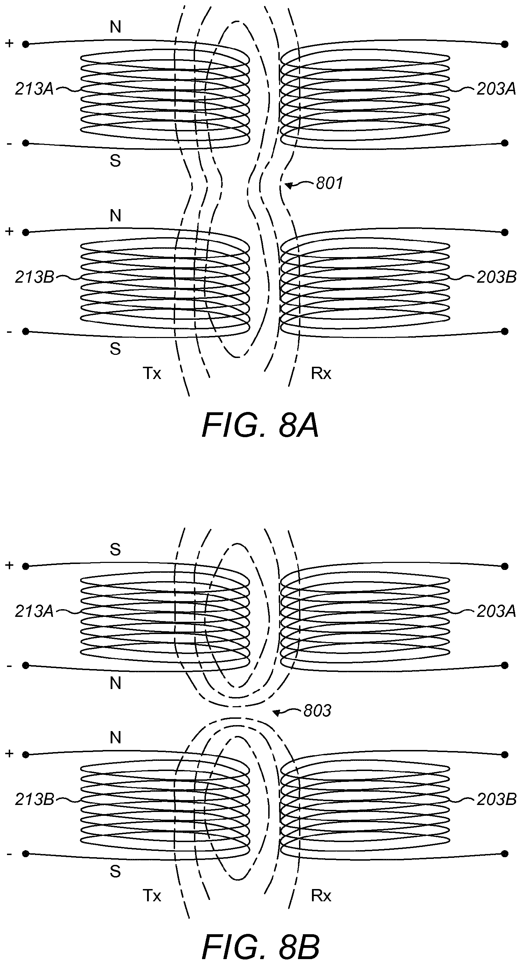

Figs. 8A and 8B illustrate effects of polarization of adjacent transmitter coils 213. In the example of Figs. 8A and 8B two transmitter coils 213A, 213B and two receiver coils 203A, 203B are shown. It is to be appreciated that any numbers of transmitter coils 213 and receiver coils 203 could be used in examples of the disclosure.

Fig. 8A shows the magnetic flux created by adjacent transmitter coils 213 when both of the transmitter coils 213 have the same polarity. This creates a region 801 of low magnetic flux density between the adjacent transmitter coils 213.

Fig. 8B shows the magnetic flux created by adjacent transmitter coils 213 when both of the transmitter coils 213 have reversed polarity. This creates a region 803 of high magnetic flux density between the adjacent transmitter coils 213. This provides for improved power transfer between the transmitter coils 213 and the receiver coils 203 because the generated electrical voltage is proportional to the rate of change of the magnetic flux.

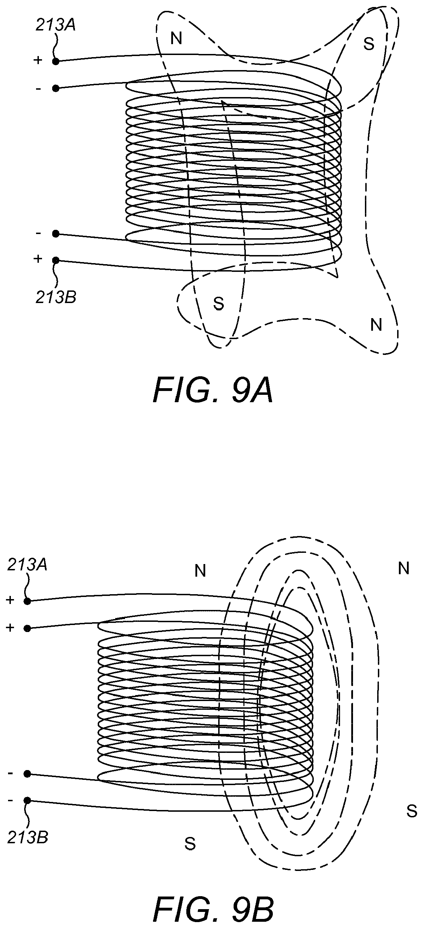

Figs. 9A and 9B show overlapping transmitter coils 213. This configuration could occur if the second garment 211 is folded back on itself. For instance if the transmission coils 213 are provided in the sleeves 241 of the second garment 211 and the user rolls up their sleeves 241 or folds their arms.

In the example shown in Fig. 9A the transmitter coils 213 are polarized so that the magnetic fields generated by the transmitter coils 213 conflict with each other so as to create a disordered magnetic field. This would result in poor power transfer from the transmitter coils 213 to the receiver coils 203.

In the example shown in Fig. 9B the transmitter coils 213 are polarized so that the magnetic fields generated by the transmitter coils 213 complement each other so as to create an ordered magnetic field. This would enable good power transfer from the transmitter coils 213 to the receiver coils 203. Therefore adjusting the polarity of the transmitter coils 213 would affect the power received by the receiver coils 203.

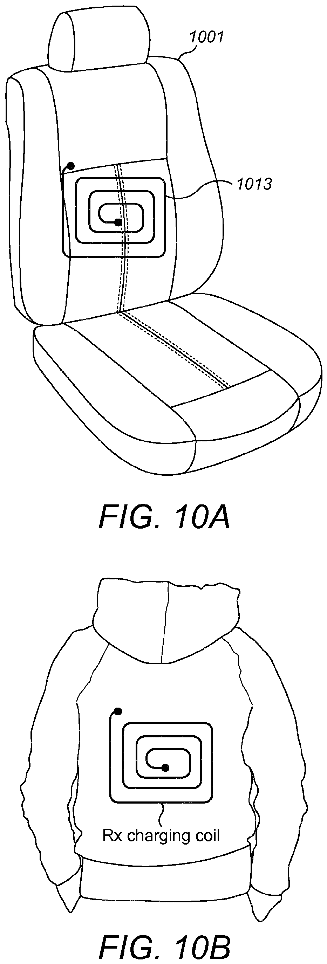

Figs. 10A and 10B show a wireless charging system for an external garment. The external garment could be a second garment 211 as described above. The second garment 211 could comprise transmission coils and other components as described above. These components are not shown in Fig. 10B for clarity.

Fig. 10A shows a seat 1001 which comprises one or more transmitter coils 1013. In the example shown in Fig. 10 the transmitter coil 1013 is provided in the back rest of the seat 1001. It is to be appreciated that the transmitter coil 1013 could be provided in other locations in other examples of the disclosure.

The second garment shown in Fig. 10B shows a receiver coil 303 which is located in the back portion of the second garment 211. The receiver coil 303 is located in the back portion of the second garment 211 so that when the user is wearing the second garment 211 and is seated in the seat 1001 there is good overlap between the transmitter coils 1013 in the seat 1001 and the receiver coils 303 in the second garment 211. This therefore enables the second garment 211 to be wirelessly charged via the seat 1001.

Once the second garment 211 has been charged via the seat 1001 the power could be stored in the power storage means 217 of the second garment 211 and/or used to charge a first garment 201 as described above.

The seat 1001 could be provided in any convenient location. In some examples the seat 1001 could be provided in a vehicle such as a car, bus or train so as to enable the second garment 211 to be charged while the user is travelling. This could be a convenient way of charging the second garment 211 as it would not require the user to remove the second garment 211 or to plug the second garment 211 into an external power source in order to recharge the second garment 211.

Examples of the disclosure therefore provide apparatus, methods and computer programs for enabling wireless power transfer between garments 201, 211. The charging can take place while the user is wearing the respective garments 201, 211 and removes the need for the use of external cables which a user might find inconvenient.

Examples of the disclosure also enable the coils 203, 213 to be adjusted so as to provide improved power transfer between the respective garments 201, 211. This may increase the efficiency of the garments 201, 211. This may also make the garments 201, 211 more convenient for a user to use as it would reduce the total charging time needed.

The above described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting'.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a subclass of the class that includes some but not all of the instances in the class. It is therefore implicitly disclosed that a feature described with reference to one example but not with reference to another example, can where possible be used in that other example as part of a working combination but does not necessarily have to be used in that other example.

Although embodiments have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain embodiments, those features may also be present in other embodiments whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer and exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for;
obtaining a signal indicative of power received by at least one receiver coil wherein the power is received by wireless transfer from at least one transmitter coil and the at least one receiver coil is provided in a first garment and the at least one transmitter coil is provided in a second garment; and
if the obtained signal indicates that the power received by the at least one receiver coil is below a threshold level, causing adjusting of at least one of the receiver coils and/or at least one of the transmitter coils relative to other coils in the garments.

2. An apparatus as claimed in any preceding claim wherein causing adjusting of at least one of the receiver coils and/or at least one of the transmitter coils comprises reducing power supplied to at least one transmitter coil.

3. An apparatus as claimed in any preceding claim wherein causing adjusting of at least one of the receiver coils and/or at least one of the transmitter coils comprises reversing polarity of at least one of the transmitter coils.

4. An apparatus as claimed in any preceding claim wherein causing adjusting of at least one of the receiver coils and/or at least one of the transmitter coils comprises providing an output indicating to a user to adjust the relative position of the garments to improve alignment of the at least one receiver coil and the at least one transmitter coil.

5. An apparatus as claimed in any preceding claim wherein the second garment comprises an outer garment which is configured to be worn over the first garment.

6. An apparatus as claimed in any preceding claim wherein the second garment comprises power storage means.

7. An apparatus as claimed in any preceding claim wherein the second garment comprises means for coupling the one or more transmitter coils to an external power source.

8. A garment comprising an apparatus as claimed in any preceding claim and one or more coils.

9. A garment as claimed in claim 8 wherein the coils comprise one or more transmitter coils.

10. A garment as claimed in claim 9 comprising means for coupling the one or more transmitter coils to an external power source.

11. A garment as claimed in any of claims 8 to 10 wherein the coils comprise one or more receiver coils.

12. A garment as claimed in claim 11 comprising power storage means.

13. A method comprising:
obtaining a signal indicative of power received by at least one receiver coil wherein the power is received by wireless transfer from at least one transmitter coil and the at least one receiver coil is provided in a first garment and the at least one transmitter coil is provided in a second garment; and
if the obtained signal indicates that the power received by the at least one receiver coil is below a threshold level, causing adjusting of at least one of the receiver coils and/or at least one of the transmitter coils relative to other coils in the garments.

14. A method as claimed in claim 13 wherein adjusting of at least one at least one of the receiver coils and/or at least one of the transmitter coils comprises at least one of:
reducing power supplied to at least one transmitter coil;
reversing polarity of at least one of the transmitter coils;
providing an output indicating to a user to adjust the relative position of the garments to improve alignment of the at least one receiver coil and the at least one transmitter coil.

15. A computer program comprising computer program instructions that, when executed by processing circuitry, cause:
obtaining a signal indicative of power received by at least one receiver coil wherein the power is received by wireless transfer from at least one transmitter coil and the at least one receiver coil is provided in a first garment and the at least one transmitter coil is provided in a second garment; and
if the obtained signal indicates that the power received by the at least one receiver coil is below a threshold level, causing adjusting of at least one of the receiver coils and/or at least one of the transmitter coils relative to other coils in the garments.
